# EUROPEAN PATENT SPECIFICATION

(11) **EP 1 418 439 B1**
(45) Date of publication and mention of the grant of the patent: **28.12.2005**
(21) Application number: 03024358.8
(22) Date of filing: 24.10.2003
(51) Int. Cl.: G01S 5/14, G01S 5/02, H04Q 7/38

(54) **Portable telephone, positioning selecting method therefor and program thereof**
Mobiltelefon, dazugehörige Positionierungsauswahlmethode und entsprechendes Programm
Téléphone mobile, la méthode de sélection de positionnement pour celui-ci et le logiciel correspondant

(30) Priority: 06.11.2002 JP 2002321934
(43) Date of publication of application: 12.05.2004
(73) Proprietor: NEC CORPORATION, Tokyo (JP)
(72) Inventor: Banno, Satoshi, Kakegawa-shi Shizuoka (JP)
(74) Representative: Glawe, Delfs, Moll

(56) References cited:
- US-A- 5 604 765
- US-A1- 2002 019 698
- US-A1- 2002 039 905
- US-A1- 2002 145 560
- US-B1- 6 353 743

## Description

### BACKGROUND OF THE INVENTION

### Field of the Invention

The present invention relates to a portable telephone, a positioning selecting method used for the same and a program thereof, and in particular, to a portable telephone having a GPS (Global Positioning System) receiver.

### Description of the Related Art

There are the cases in the past where a handheld terminal unit such as a portable telephone or a PDA (Personal Digital Assistant) has a GPS receiver in order to detect a location of a user having that terminal unit.

A technology of a handheld terminal unit having a GPS receiver is disclosed in Japanese Patent Laid-Open No.2000-241526. In Japanese Patent Laid-Open No.2000-241526, a GPS positioning apparatus determines a location of a radio base station based on ID information on the radio base station obtained from a GPS receiving terminal having a GPS receiver, and the GPS receiving terminal calculates a pseudo-distance from the GPS receiving terminal to each GPS satellite based on the location of the radio base station. Thus, a limit of distance between the GPS receiving terminal and the GPS positioning apparatus is dissolved and a GPS positioning range is improved.

Another technology of a handheld terminal unit having a GPS receiver is disclosed in Japanese Patent Laid-Open No.2000-341737. In Japanese Patent Laid-Open No.2000-341737, when selecting a base station for communicating with a mobile station having a GPS receiver, a location of the mobile station is determined by the GPS so as to select a base station at the shortest distance to the mobile station.

As for the technology other than the above, there is the technology wherein, even in a situation essentially incapable of performing the GPS positioning such as having two or less GPS satellites from which a PHS terminal having a GPS receiver can receive signals, it allows a location of the PHS terminal to be determined based on the location information of a PHS (Personal Handy-phone System) base station (refer to Japanese Patent Laid-Open No.2001-305210).

In the case of determining a location of a handheld terminal unit, there are often the cases where detailed location information of the handheld terminal unit is necessary for the handheld terminal unit located in an area near an objective point, but rough location information is sufficient for the handheld terminal unit located in a distant area.

In the case of using a GPS, the location of the handheld terminal unit located in the area near the objective point can be determined in detail. However, the location of the handheld terminal unit located in the area distant from the objective point also is determined in detail so that a lot of waste arises in the positioning. In addition, the positioning takes time and increases power consumption due to GPS positioning.

Furthermore, there is a method of receiving location information of a base station and rendering it as a location of a portable telephone. However, the location of the portable telephone located in the area near the objective point cannot be determined in detail by that method.

US 2002/019698 A1 discloses a portable telephone according to the preamble of claim 1 as well as a method according to the preamble of claim 4.

US-A-5,604,765 discloses a portable telephone capable of determining the location of the telephone by means of GPS or alternatively by means of a communication network for outdoor locations and by means of a signpost positioning method for indoor location locations.

### SUMMARY OF THE INVENTION

An object of the present invention is to provide a portable telephone, a positioning selecting method used for the same and a program thereof capable of reducing the power consumption and shortening positioning time.

This object is achieved by a portable telephone as claimed in claim 1 and by a method as defined in claim 4, respectively, the dependent claims are related to further developments of the invention.

To be more specific, a portable telephone according to the present invention is characterized in that the telephone having a GPS (Global Positioning System) receiver optimally selects a method for determinig the location of the telephone according to the distance from the objective point or a reception level of a downlink signal received by the portable telephone.

Thus, when determining the location of the portable telephone, the portable telephone according to the present invention does not constantly determine the location by using the GPS which requires high power consumption and takes time for the positioning, but automatically switches a positioning method according to the distance from the objective point. Therefore, the portable telephone having the GPS receiver does not need to constantly perform the GPS positioning when determining the location of the portable telephone so that it is possible to reduce the power consumption and shorten the positioning time.

The portable telephone according to the present invention receives the location of a portable telephone base station when in a distant place from the objective point, regards it as the location of the telephone, and exerts control to gradually increase the number of times the GPS positioning is selected as it comes closer to the objective point. Therefore, there are often the cases where detailed latitude and longitude information is unnecessary in the distant place from the objective point, and so it is possible, in a system for constantly displaying correct maps and place-names or returning an instruction to be executed according to change in determined latitude and longitude information, to keep from updating the maps and place-names or generating the instruction to be executed when the location of the telephone is still in the distant place from the objective point.

Furthermore, the portable telephone according to the present invention calculates the distance to the objective point on determining the location of the telephone, and determines a next positioning method according to that distance. Therefore, it is possible to alleviate the user operations by automatically selecting the positioning method.

### BRIEF DESCRIPTION OF THE DRAWINGS

FIG. 1 is a block diagram showing the configuration of a portable telephone according to a first embodiment of the present invention;
FIG. 2 is a flowchart showing the operations of the portable telephone according to the first embodiment of the present invention;
FIG. 3 is a flowchart showing the operations of the portable telephone according to the first embodiment of the present invention;
FIG. 4 is a diagram showing a positioning selecting method of the portable telephone according to the first embodiment of the present invention;
FIG. 5 is a block diagram showing the configuration of a portable telephone according to a second embodiment of the present invention;
FIG. 6 is a flowchart showing the operations of the portable telephone according to the second embodiment of the present invention; and
FIG. 7 is a diagram showing a positioning selecting method of the portable telephone according to the second embodiment of the present invention.

### DETAILED DESCRIPTION OF THE PREFERRED EMBODIMENTS

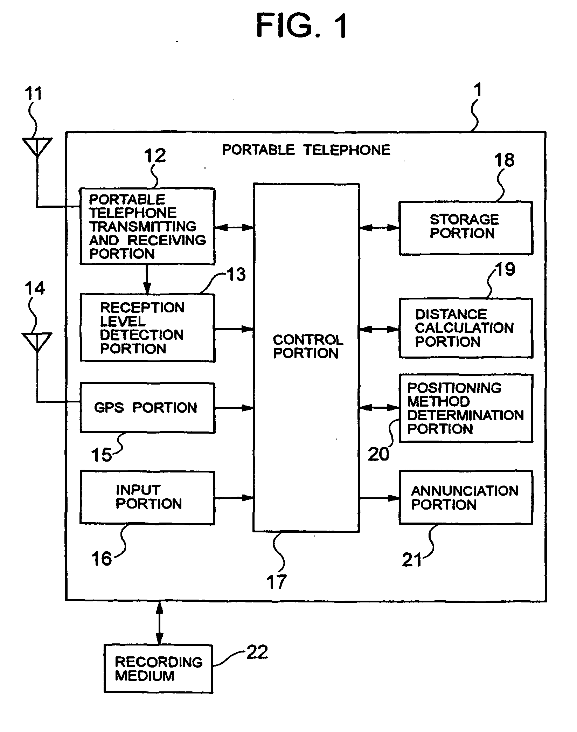

The embodiments of the present invention will be described below by referring to the drawings. FIG. 1 is a block diagram showing the configuration of a portable telephone according to a first embodiment of the present invention. InFIG. 1, a portable telephone 1 is comprised of a portable telephone antenna 11, a portable telephone transmitting and receiving portion 12, a reception level detection portion 13, a GPS (Global Positioning System) antenna 14, a GPS portion 15, an input portion 16, a control portion 17, a storage portion 18, a distance calculation portion 19, a positioning method determination portion 20, an annunciation portion 21 and a recording medium 22.

The portable telephone antenna 11 receives and transmits data from/to a portable telephone network not shown. Theportable telephone transmitting and receiving portion 12 demodulates the received data from the portable telephone antenna 11, and modulates the data to be transmitted to the network. The reception level detection portion 13 detects a reception level of a downlink signal from radio waves received by the portable telephone antenna 11.

The GPS antenna 14 catches radio waves transmitted from each GPS satellite not shown, and the GPS portion 15 calculates location information (latitude and longitude information) of the portable telephone 1 based on GPS data received by the GPS antenna 14. Location information (latitude and longitude information) of an objective point is inputted by using the input portion 16.

The control portion 17 executes a program (program executable by a computer) stored in the recording medium 22, and thereby controls various operations inside the portable telephone 1. The storage portion 18 stores the location information of the objective point inputted from the input portion 16, location information of the portable telephone 1, flag information determined according to the distance calculated by the distance calculation portion 19 and so on.

The distance calculation portion 19 calculates a distance between the location of the portable telephone 1 and the objective point. The positioning method determination portion 20 makes a selection either to obtain the location information of the portable telephone 1 by GPS positioning or to obtain the location information of a portable telephone base station (not shown) as the location information of the portable telephone 1. The annunciation portion 21 announces to the outside that the portable telephone 1 has reached the objective point by sound, light, vibration, display and so on.

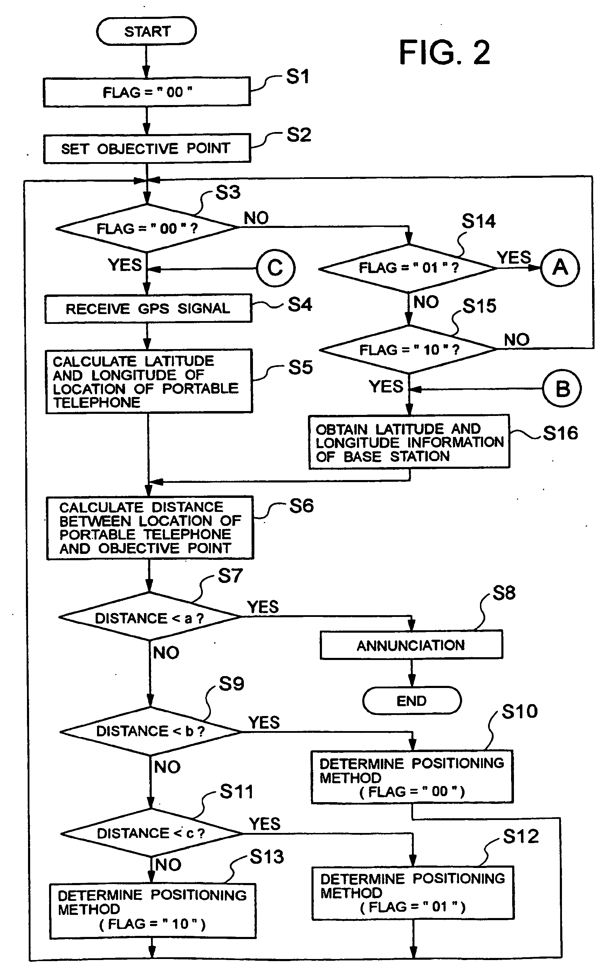

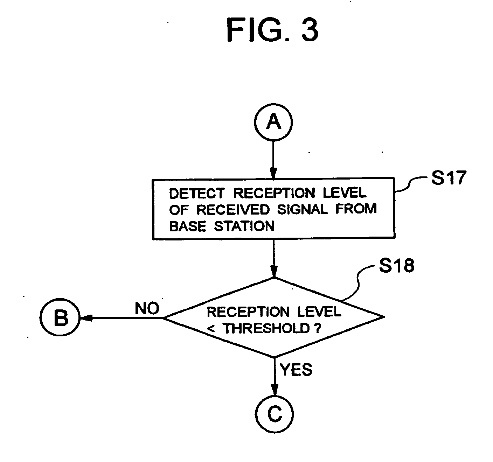

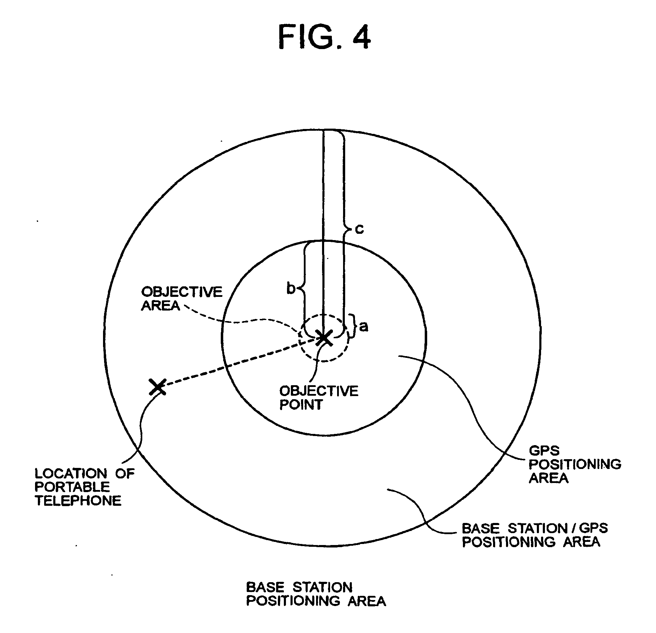

FIGS. 2 and 3 are flowcharts showing the operations of the portable telephone 1 according to the first embodiment of the present invention, and FIG. 4 is a diagram showing a positioning selecting method of the portable telephone 1 according to the first embodiment of the present invention. With reference to FIGS. 1 to 4, the operations of the portable telephone 1 according to the first embodiment of the present invention will be described. The processes shown in FIGS. 2 and 3 are implemented by having the program on the recording medium 22 executed by the control portion 17.

In the case of performing the operation of determining the location of the portable telephone 1 according to the first embodiment of the present invention, the control portion 17 initializes a flag value as initialization at the start, and sets "00" to the flag value as an initial value (step S1 in FIG. 2). The flag value will be described later.

Next, to register the objective point, the control portion 17 has the latitude and longitude information of the objective point inputted from the input portion 16, and stores the information in the storage portion 18 (step S2 in FIG. 2).

Subsequently, the control portion 17 starts positioning (determination of the location of the portable telephone 1). A method of obtaining (determining) the latitude and longitude information of the portable telephone 1 depends on the flag value. At first positioning after setting the objective point, the flag value is an initialized flag value (flag value = "00"). In the case where the flag value is "00" (step S3 in FIG. 2), the GPS positioning is performed. The GPS portion 15 receives GPS data via the GPS antenna 14 (step S4 in FIG. 2), and calculates the latitude and longitude information of the portable telephone 1 to store it in the storage portion 18 (step S5 in FIG. 2).

Next, the distance calculation portion 19 reads the latitude and longitude information of the objective point registered in step S2 and the latitude and longitude information of the portable telephone 1 determined by the GPS antenna 14 and GPS portion 15 in step S5 from the storage portion 18, and calculates the distance between the location of the portable telephone 1 and the objective point to store it in the storage portion 18 (step S6 in FIG. 2). Thereafter, the positioning method determination portion 20 selects a positioning method (method of obtaining the latitude and longitude information of the portable telephone 1) to be performed on the next positioning based on the distance calculated by the distance calculation portion 19.

In the case where the location of the portable telephone 1 is within an objective area (area of radius a in FIG. 4) (distance < a) (step S7 in FIG. 2), the positioning method determination portion 20 determines that the portable telephone 1 has reached the objective point, and the annunciation portion 21 announces to the user that the portable telephone 1 has reached the objective point by sound, light, vibration, display and so on (step S8 in FIG. 2) so as to finish the process.

In the case where the location of the portable telephone 1 is outside the objective area (step S7 in FIG. 2) and is within a GPS positioning area (refer to FIG. 4) within a radius b from the objective point (distance < b) (step S9 in FIG. 2), the positioning method determination portion 20 determines the next positioning method as the "GPS positioning" and sets the flag value at "00" (step S10 in FIG. 2).

Furthermore, in the case where the location of the portable telephone 1 is outside the GPS positioning area (step S9 in FIG. 2) and is within a base station/GPS positioning area (refer to FIG. 4) within a radius c from the objective point (distance < c) (step S11 in FIG. 2), the positioning method determination portion 20 determines the next positioning method as "GPS positioning or obtaining the location information of a portable telephone base station" and sets the flag value at "01" (step S12 in FIG. 2).

Furthermore, in the case where the location of the portable telephone 1 is outside the base station/GPS positioning area (step S11 in FIG. 2), the positioning method determination portion 20 determines the next positioning method as "obtaining the location information of a portable telephone base station" and sets the flag value at "10" (step S13 in FIG. 2). The flag value "10" means that the location of the portable telephone 1 is still distant from the objective point and detailed location information is not yet required at the next positioning.

After the next positioning method is determined by the above processes, the control portion 17 performs positioning again accordiong to the flag value. The control portion 17 reads the flag value from the storage portion 18 and switches the positioning method according to the flag value (steps S3, S14 and S15 in FIG. 2).

If the location of the portable telephone 1 determined in step S5 is within a base station positioning area (refer to FIG. 4) and the flag value is "10" (step S15 in FIG. 2), the control portion 17 performs the positioning by obtaining the location information of a portable telephone base station.

The portable telephone 1 transmits a base station latitude and longitude information request signal from the portable telephone transmitting and receiving portion 12 and the portable telephone antenna 11 to a base station. The base station having received the base station latitude and longitude information request signal transmits the latitude and longitude information of the base station to the portable telephone 1. On receiving the latitude and longitude information of the base station with the portable telephone antenna 11 and the portable telephone transmitting and receiving portion 12, the control portion 17 stores the received information as the location information of the portable telephone 1 in the storage portion 18 (step S16 in FIG. 2).

Next, the distance calculation portion 19 reads the latitude and longitude information of the objective point and the location information of the portable telephone 1 (latitude and longitude information of the base station) obtained from the base station in step S16 from the storage portion 18, and calculates the distance between the location of the portable telephone 1 and the objective point (step S6 in FIG. 2).

If the portable telephone 1 has moved and the location of the portable telephone 1 detected in setp S16 is within the base station/GPS positioning area (refer to FIG. 4) (steps S7, S9 and S11 in FIG. 2), the positioning method determination portion 20 determines the next positioning method as "GPS positioning or obtaining the location information of a portable telephone base station" and sets the flag value at "01" (step S12 in FIG. 2). The flag value "01" means that the location of the portable telephone 1 is still at an intermediate position from the objective point and location information detailed to an extent is required at the next positioning.

After the next positioning method is determined by the above-mentioned processes, the control portion 17 performs positioning again according to the flag value "01". As the flag value is "01" (step S14 in FIG. 2), the control portion 17 may have two types of positioning method, that is, " GPS positioning" and "obtaining the location information of a portable telephone base station."

Thus, the reception level detection portion 13 detects the reception level of a downlink signal received by the portable telephone antenna 11 (step S17 in FIG. 3), and then the control portion 17 determines whether the level of the received signal is higher or lower than a predetermined threshold level so as to determine the positioning method (step S18 in FIG. 3).

If the level of the received signal is higher than the threshold level (step S18 in FIG. 3), the portable telephone base station exists at a position near the location of the portable telephone 1, and so the control portion 17 selects "obtaining the location information of a portable telephone base station" as the positioning method. Therefore, the procedure goes to step S16.

If the level of the received signal is lower than the threshold level (step S18 in FIG. 3), the portable telephone base station exists at a position distant from the location of the portable telephone 1, and so the control portion 17 selects "GPS positioning" as the positioning method. Therefore, the procedure goes to step S4.

When the location informtaion of the portable telephone 1 is calculated or obtained in step S5 or S16 and the distance between the location of the portable telephone 1 and the objective point is calculated by the distance calculation portion 19 (step S6 in FIG. 2), and if the portable telephone 1 has moved and the location of the portable telephone 1 is within the GPS positioning area (refer to FIG. 4) (steps S7 and S9 in FIG. 2), the positionong method determination portion 20 determines the next positioning method as " GPS positioning" and sets the flag value at "00" (step S10 in FIG. 2). The flag value "00" means that the location of the portable telephone 1 is at a position near the objective point and detailed location information is required at the next positioning.

After the next positioning method is determined by the above-mentioned processes, the control portion 17 performs positioning again according to the flag value "00". Thereafter, the control portion 17 repeats the above processing operations according to the flag value until reaching the objective point.

Thus, according to the first embodiment, on determining the location of the portable telephone 1, it does not constantly determine the location by using the GPS which requires high power consumption and takes time for the positioning, but automatically switches a positioning method according to the distance between the location of the portable telephone 1 and the objective point. Therefore, the portable telephone 1 does not need to constantly perform the GPS positioning when determining the location of the portable telephone 1 so that it can reduce the power consumption and shorten the positioning time.

According to the first embodiment, the portable telephone 1 receives the location of the portable telephone base station when in a distant place from the objective point, regards it as the location of the portable telephone 1, and exerts control to gradually increase the number of times the GPS positioning is selected as it comes closer to the objective point. Therefore, there are often the cases where detailed latitude and longitude information is unnecessary in the distant place from the objective point, and so it is possible, in a system for constantly displaying correct maps and place-names or returning an instruction to be executed according to change in determined latitude and longitude information, to keep from updating the maps and place-names or generating the instruction to be executed more than necessary when the location of the portable telephone 1 is still in the distant place from the objective point.

Furthermore, according to the first embodiment, the telephone 1 calculates the distance to the objective point on determining the location of the portable telephone 1, and determines the next positioning method according to that distance. Therefore, it can alleviate the user operations by automatically selecting the positioning method.

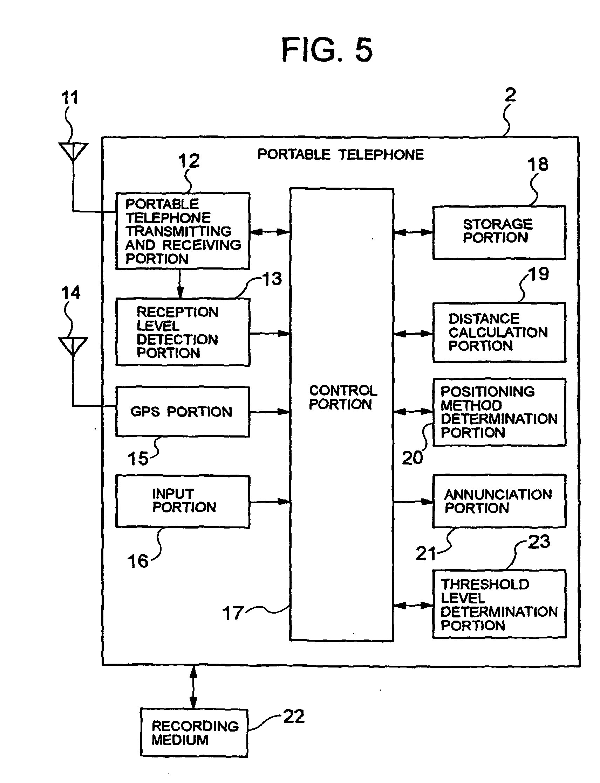

FIG. 5 is a block diagram showing the configuration of a portable telephone according to a second embodiment of the present invention. In FIG. 5, the second embodiment of the present invention has the same configuration as that of the portable telephone 1 according to the first embodiment of the present invention shown in FIG. 1 except that a threshold level determination portion 23 is added thereto, and so the same components are given the same reference numerals as those in FIG. 1. And the operations of the same components are the same as those in the first embodiment.

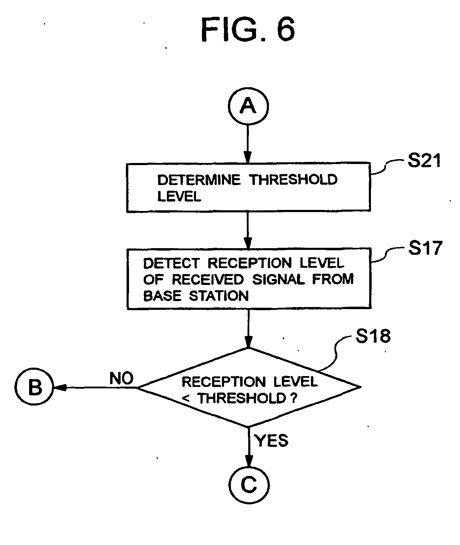

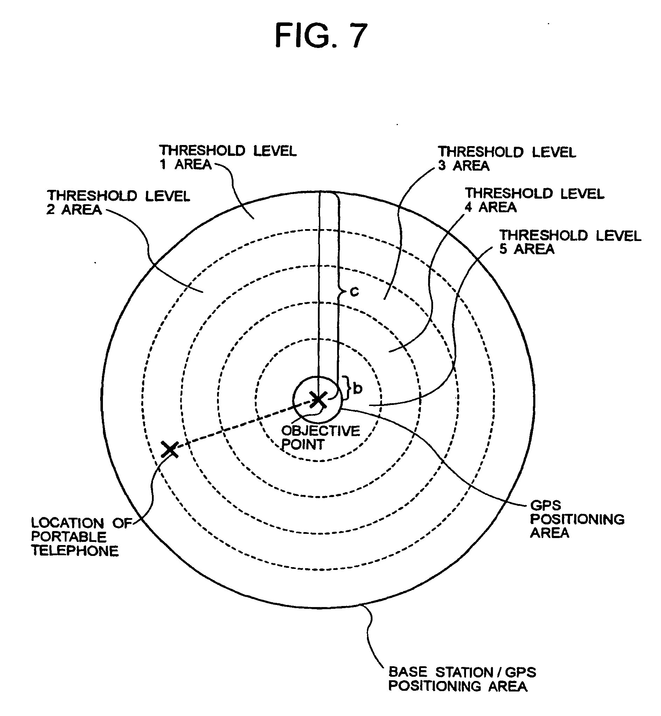

FIG. 6 is a flowchart showing the operations of the portable telephone 2 according to the second embodiment of the present invention, and FIG. 7 is a diagram showing a positioning selecting method of the portable telephone 2 according to the second embodiment of the present invention. The positioning selecting method according to the second embodiment of the present invention is the same as that according to the first embodiment of the present invention shown in FIGS. 2 and 3 except that the threshold level determination (step S21 in FIG. 6) is added thereto. To be more specific, the positioning selecting method according to the second embodiment of the present invention is the processing operations shown in FIG. 2 having the processing operations shown in FIG. 6 added thereto.

With reference to FIG. 2 and FIGS. 5 to 7, the operations of the portable telephone 2 according to the second embodiment of the present invention will be discribed. The processes shown in FIGS. 2 and 6 are implemented by having the program on the recording medium 22 executed by the control portion 17.

According to the first embodiment, when the flag value is "01" (step S14 in FIG. 2), the control portion 17 selects "GPS positioning" or "obtaining the location information of a portable telephone base station" by whether the reception level of the downlink signal received by the portable telephone antenna 11 is higher or lower than a fixed threshold. According to the second embodiment, the threshold level is rendered variable so as to allow more effective selection.

To be more specific, when the flag value is "01" (step S14 in FIG. 2), the threshold level determination portion 23 reads the distance data between the location of the portable telephone 2 and the objective point from the storage portion 18 so as to determine the threshold level according to the distance (step S21 in FIG. 6).

Hereafter, the method of determining the threshold level will be described. The storage portion 18 has threshold level information such as the following stored therein in advance.
Threshold level 1: 10dB µ
Threshold level 2: 15dB µ
Threshold level 3: 20dB µ
Threshold level 4: 30dB µ
Threshold level 5: 40dB µ

As shown in FIG. 7, the base station/GPS positioning area is concentrically divided according to the distance from the objective point, such as a "threshold level 1 area, "a"threshold level 2 area," ..., a "threshold level 5 area" in decreasing order of distance from the objective point. If the threshold level determination portion 23 reads the distance data from the storage portion 18 and determines that the location of the portable telephone 2 is in the threshold level 2 area, it determines that the threshold to be used is the "threshold level 2 (15dB µ)."

After determining the threshold level, the reception level detection portion 13 detects the reception level of the downlink signal received by the portable telephone antenna 11 (step S17 in FIG. 6), and then the control portion 17 determines the positioning method by whether the reception level of the received signal is higher or lower than the "threshold level 2 (15dB µ)" (step S18 in FIG. 6). Thus, the farther from the objective point the location of the portable telephone 2 is, the easier it becomes to select the positioning method of "obtaining the location information of a portable telephone base station, and the closer to the objective point the location of the portable telephone 2 is, the easier it becomes to select the positioning method of "GPS positioning. " The operations thereafter is the same as the first embodiment of the present invention.

Thus, according to the second embodiment, on determining the location of the portable telephone 2, it does not constantly determine the location by using the GPS which requires high power consumption and takes time for the positioning, but automatically switches a positioning method according to the distance between the location of the portable telephone 2 and the objective point. Therefore, the portable telephone 2 does not need to constantly perform the GPS positioning when determining the location of the portable telephone 2 so that it can reduce the power consumption and shorten the positioning time.

According to the second embodiment, the portable telephone 2 receives the location of the portable telephone base station when in a distant place from the objective point, regards it as the location of the portable telephone 2, and exerts control to gradually increase the number of times the GPS positioning is selected as it comes closer to the objective point. Therefore, there are often the cases where detailed latitude and longitude information is unnecessary in the distant place from the objective point, and so it is possible, in a system for constantly displaying correct maps and place-names or returning an instruction to be executed according to change in determined latitude and longitude information, to keep from updating the maps and place-names or generating the instruction to be executed more than necessary when the location of the portable telephone 2 is still in the distant place from the objective point.

Furthermore, according to the second embodiment, the portable telephone 2 calculates the distance to the objective point on determining the location of the portable telephone 2, and determines the next positioning method according to that distance. Therefore, it can alleviate the user operations by automatically selecting the positioning method.

As described above, a portable telephone according to the present invention is a portable telephone capable of determining the location of the telephone with a global positioning system, wherein a distance between an objective point and the location of the telephone is calculated, an area where the telephone is located is determined according to the calculated distance, and one positioning method is selected from positioning methods of different positioning accuracies according to the determination results so that the effects of reducing the power consumption and shortening the positioning time can be obtained.

## Claims

1. A portable telephone capable of determining the location of the telephone with a global positioning system, wherein the telephone has calculation means (19) for calculating a distance between an objective point and the location of the telephone, determination means for determining an existence area where the telephone is located according to the calculated distance, and selection means (20) for selecting one positioning method from positioning methods of different positioning accuracies,
***characterized in that*** said selection means (20) is adapted to select the positioning method for performing detailed positioning when said existence area is an area near said objective point, to select the positioning method for performing rough positioning when said existence area is an area far from said objective point, and to select one of the two positioning methods when said existence area is an intermediate area to said objective point,
wherein the positioning method for performing the detailed positioning is a positioning method using said global positioning system.

2. A portable telephone according to claim 1,
wherein, when said existence area is the intermediate area, said selection means is adapted to select one of the two positioning methods according to a reception level of a signal received from a base station,
wherein, when selecting one of the two positioning methods according to the reception level, said selection means determines a threshold level to be compared to the reception level according to the calculated distance.

3. The portable telephone according to claim 1, wherein the positioning method for performing the rough positioning is a positioning method of determining the location of the telephone based on location information of a base station.

4. A positioning selecting method of a portable telephone capable of determining the location of the telephone with a global positioning system, wherein the method has a calculation step of calculating a distance between an objective point and the location of the telephone, a determination step of determining an existence area where the telephone is located according to the calculated distance, and a selection step of selecting one positioning method from positioning methods of different positioning accuracies,
***characterized in that,*** said selection step selects the positioning method for performing detailed positioning when said existence area is an area near said objective point, selects the positioning method for performing rough positioning when said existence area is an area far from said objective point, and selects one of the two positioning methods when said existence area is an intermediate area to said objective point,
wherein the positioning method for performing the detailed positioning is a positioning method using said global positioning system.

5. A positioning selecting method according to claim 4,
wherein, when said existence area is the intermediate area, said selection step selects one of the two positioning methods according to a reception level of a signal received from a base station,
wherein, when selecting one of the two positioning methods according to the reception level, said selection step determines a threshold level to be compared to the reception level according to the calculated distance.

6. The positioning selecting method according to claim 4, wherein the positioning method for performing the rough positioning is a positioning method of determining the location of the telephone based on location information of a base station.

7. A computer program of a positioning selecting method of a portable telephone capable of determining the location of the telephone with a global positioning system, wherein said program causes a computer to execute a process according to the method of claim 4, 5 or 6.

## Patentansprüche

1. Mobiles Telefon mit der Möglichkeit der Bestimmung der Position des Telefons mit einem globalen Positionsbestimmungssystem, wobei das Telefon Berechnungsmittel (19) aufweist zum Berechnen eines Abstandes zwischen einem Zielpunkt und dem Ort des Telefons, Bestimmungsmittel zum Bestimmen eines Existenzbereiches, in dem das Telefon gemäß dem berechneten Abstand angeordnet ist, und Auswahlmittel (20) zum Auswählen eines Positionsbestimmungsverfahrens aus Positionsbestimmungsverfahren mit unterschiedlichen Positionsbestimmungsgenauigkeiten, **dadurch gekennzeichnet, dass** die Auswahlmittel (20) ausgebildet sind, um das Positionsbestimmungsverfahren zum Durchführen einer detaillierten Positionsbestimmung auszuwählen, wenn der Existenzbereich in einem Bereich nahe des Zielpunktes ist, um das Positionsbestimmungsverfahren zur Durchführung einer groben Positionsbestimmung auszuwählen, wenn der Existenzbereich ein Bereich entfernt von dem Zielpunkt ist, und zur Auswahl eines der beiden Positionsbestimmungsverfahren, wenn der Existenzbereich ein Zwischenbereich zu dem Zielpunkt ist,
wobei das Positionsbestimmungsverfahren zur Durchführung der detaillierten Positionsbestimmung ein Positionsbestimmungsverfahren ist, das das globale Positionsbestimmungssystem verwendet.

2. Mobiles Telefon nach Anspruch 1, wobei, wenn der Existenzbereich nicht der Zwischenbereich ist, die Auswahlmittel ausgebildet sind, um eines der beiden Positionsbestimmungsverfahren gemäß einem Empfangspegel eines Signals, das von einer Basisstation empfangen wird, auszuwählen,
wobei, wenn die Auswahl eines der beiden Positionsbestimmungsverfahren gemäß dem Empfangspegel durchgeführt wird, die Auswahlmittel einen Schwellwertpegel bestimmen, der mit dem Empfangspegel gemäß dem berechneten Abstand zu vergleichen ist.

3. Mobiles Telefon nach Anspruch 1, wobei das Positionsbestimmungsverfahren zur Durchführung der groben Positionsbestimmung ein Positionsbestimmungsverfahren zum Bestimmen des Ortes des Telefons basierend auf einer Positionsinformation einer Basisstation ist.

4. Positionsbestimmungsauswahlverfahren eines mobilen Telefons, das in der Lage ist, die Position des Telefons mit einem globalen Positionierungsbestimmungssystem festzustellen, wobei das Verfahren einen Berechnungsschritt aufweist zur Berechnung eines Abstandes zwischen einem Zielpunkt und der Position des Telefons, einen Bestimmungsschritt zum Bestimmen eines Existenzbereichs, in dem gemäß dem berechneten Abstand das Telefon angeordnet ist, und einen Auswahlschritt zur Auswahl eines Positionsbestimmungsverfahrens von Positionsbestimmungsverfahren verschiedener Positionsbestimmungsgenauigkeiten, **dadurch gekennzeichnet, dass** der Auswahlschritt das Positionsbestimmungsverfahren zur Durchführung einer detaillierten Positionsbestimmung auswählt, wenn der Existenzbereich ein Bereich nahe des Zielpunktes ist, das Positionsbestimmungsverfahren zur Durchführung einer groben Positionsbestimmung auswählt, wenn der Existenzbereich ein Bereich entfernt von dem Zielpunkt ist, und eines der beiden Positionsbestimmungsverfahren auswählt, wenn der Existenzbereich ein Zwischenbereich zu dem Zielpunkt ist, wobei das Positionsbestimmungsverfahren zur Durchführung der detaillierten Positionsbestimmung ein Positionsbestimmungsverfahren ist, das das globale Positionierungsbestimmungssystem verwendet.

5. Positionsbestimmungsauswahlverfahren nach Anspruch 4, wobei, wenn der Existenzbereich ein Zwischenbereich ist, der Auswahlschritt eines der beiden Positionsbestimmungsverfahren gemäß einem Empfangspegel eines Signals auswählt, das von einer Basisstation empfangen wurde, wobei, wenn eines der beiden Positionsbestimmungsverfahren gemäß dem Empfangspegel ausgewählt wird, der Auswahlschritt einen Schwellwertpegel bestimmt, der mit dem Empfangspegel gemäß dem berechneten Abstand zu vergleichen ist.

6. Positionsbestimmungsauswahlverfahren nach Anspruch 4, wobei das Positionsbestimmungsverfahren zur Durchführung der groben Positionsbestimmung ein Positionsbestimmungsverfahren ist zur Bestimmung des Ortes des Telefons basierend auf einer Positionsinformation einer Basisstation.

7. Computerprogramm eines Positionierungsauswahlverfahrens eines Mobiltelefons, das die Position eines Telefons mit einem globalen Positionsbestimmungssystem ermitteln kann, wobei das Programm einen Computer veranlasst, einen Prozess gemäß dem Verfahren der Ansprüche 4, 5 oder 6 durchzuführen.

## Revendications

1. Téléphone portable capable de déterminer la position du téléphone au moyen d'un système de positionnement global, dans lequel le téléphone comporte des moyens de calcul (19) pour calculer une distance entre un point objectif et la position du téléphone, des moyens de détermination pour déterminer une zone d'existence où le téléphone est situé en fonction de la distance calculée, et des moyens de sélection (20) pour sélectionner un procédé de positionnement parmi des procédés de positionnement avec différentes précisions de positionnement,
**caractérisé en ce que** lesdits moyens de sélection (20) sont adaptés pour sélectionner le procédé de positionnement pour effectuer un positionnement détaillé lorsque ladite zone d'existence est une zone proche dudit point objectif, pour sélectionner le procédé de positionnement pour effectuer un positionnement approximatif lorsque ladite zone d'existence est une zone éloignée dudit point objectif, et pour sélectionner l'un des deux procédés de positionnement lorsque ladite zone d'existence est une zone intermédiaire par rapport audit point objectif,
dans lequel le procédé de positionnement pour effectuer le positionnement détaillé est un procédé de positionnement utilisant ledit système de positionnement global.

2. Téléphone portable selon la revendication 1,
dans lequel, lorsque ladite zone d'existence est la zone intermédiaire, lesdits moyens de sélection sont adaptés pour sélectionner l'un des deux procédés de positionnement en fonction d'un niveau de réception d'un signal reçu d'une station de base,
dans lequel, lors de la sélection de l'un des deux procédés de positionnement en fonction du niveau de réception, lesdits moyens de sélection déterminent un niveau de seuil devant être comparé au niveau de réception en fonction de la distance calculée.

3. Téléphone portable selon la revendication 1,
dans lequel le procédé de positionnement pour effectuer le positionnement approximatif est un procédé de positionnement de détermination de la position du téléphone sur la base d'informations de position d'une station de base.

4. Procédé de sélection de positionnement d'un téléphone portable capable de déterminer la position du téléphone au moyen d'un système de positionnement global, dans lequel le procédé comporte une étape de calcul consistant à calculer une distance entre un point objectif et la position du téléphone, une étape de détermination consistant à déterminer une zone d'existence où le téléphone est situé en fonction de la distance calculée, et une étape de sélection consistant à sélectionner un procédé de positionnement parmi des procédés de positionnement avec différentes précisions de positionnement,
**caractérisé en ce que**, ladite étape de sélection sélectionne le procédé de positionnement pour effectuer un positionnement détaillé lorsque ladite zone d'existence est une zone proche dudit point objectif, sélectionne le procédé de positionnement pour effectuer un positionnement approximatif lorsque ladite zone d'existence est une zone éloignée dudit point objectif, et sélectionne l'un des deux procédés de positionnement lorsque ladite zone d'existence est une zone intermédiaire par rapport audit point objectif,
dans lequel le procédé de positionnement pour effectuer le positionnement détaillé est un procédé de positionnement utilisant ledit système de positionnement global.

5. Procédé de sélection de positionnement selon la revendication 4,
dans lequel, lorsque ladite zone d'existence est la zone intermédiaire, ladite étape de sélection sélectionne l'un des deux procédés de positionnement en fonction d'un niveau de réception d'un signal reçu d'une station de base,
dans lequel, lors de la sélection de l'un des deux procédés de positionnement en fonction du niveau de réception, ladite étape de sélection détermine un niveau de seuil devant être comparé au niveau de réception en fonction de la distance calculée.

6. Procédé de sélection de positionnement selon la revendication 4, dans lequel le procédé de positionnement pour effectuer le positionnement approximatif est un procédé de positionnement de détermination de la position du téléphone sur la base d'informations de position d'une station de base.

7. Programme informatique d'un procédé de sélection de positionnement d'un téléphone portable capable de déterminer la position du téléphone au moyen d'un système de positionnement global, dans lequel ledit programme amène un ordinateur à exécuter un processus selon le procédé de la revendication 4, 5 ou 6.
